**Europäisches Patentamt**

**European Patent Office**

**Office européen des brevets**

(11) Numéro de publication: **0 123 584**

**A1**

# (12) DEMANDE DE BREVET EUROPEEN

(21) Numéro de dépôt: **84400577.7**

(22) Date de dépôt: **21.03.84**

(51) Int. Cl.³: **H 04 N 9/40**

(30) Priorité: **24.03.83 FR 8304870**

(43) Date de publication de la demande:
**31.10.84 Bulletin 84/44**

(84) Etats contractants désignés:
**AT BE CH DE GB IT LI LU NL SE**

(71) Demandeur: **S.A. DEMIA**
**3 boulevard Pasteur**
**Luxembourg(LU)**

(84) Etats contractants désignés:
**BE CH DE GB IT LI NL SE AT**

(71) Demandeur: **SODECOM**
**15 bis rue de Marignan**
**F-75008 Paris(FR)**

(84) Etats contractants désignés:
**LU**

(72) Inventeur: **Mikrut, Antoine**
**37 rue Reuilly**
**F-75012 Paris(FR)**

(74) Mandataire: **Beauchamps, Georges et al,**
**Cabinet Z.Weinstein 20, avenue de Friedland**
**F-75008 Paris(FR)**

(54) Système de traitement de signaux de télévision en couleur, notamment du type SECAM.

(57) La présente invention concerne un système de traitement de signaux vidéo issus d'une source de signaux de télévision en couleur, notamment du type SECAM.

Selon l'invention, un dispositif d'enregistrement de ces signaux vidéo comprend trois voies d'enregistrement (C, D, E), deux des voies (C, D) recevant respectivement les signaux de chrominance $D_R$ et $D_B$ tandis que la troisième voie (E) reçoit le signal d'information de luminance $E'_Y$ les signaux de sorties des trois voies d'enregistrement étant appliqués à un circuit de mixage (84) dont la sortie est reliée à au moins un organe d'enregistrement (85) des signaux vidéo sur un support d'enregistrement.

La présente invention trouve application notamment dans l'enregistrement de signaux vidéo issus d'une caméra de télévision en couleur ou d'un dispositif de restitution tel qu'un magnétoscope, appareil à vidéodisque.

FIG. 6

1

<u>Système de traitement de signaux de télévision en couleur,</u>
<u>notamment du type SECAM</u>

La présente invention concerne un système de traitement
de signaux de télévision en couleur, notamment du type
SECAM, issus d'un dispositif émetteur et appliqués à
un dispositif récepteur tel qu'un dispositif d'enregistrement (magnétoscope, appareil à vidéodisque).

Il est bien connu que les systèmes classiques destinés
au traitement des signaux de chrominance et de luminance,
du type SECAM sont fondés sur l'utilisation de deux
sous-porteuses de couleur respectivement de 4,406 et
4,25 MHz qui transmettent alternativement les signaux
de chrominance $D_R$ d'une ligne et les signaux de
chrominance $D_B$ de la ligne suivante. Les sous-porteuses
sont modulées en fréquence. A cette fin, les signaux
de chrominance sont appliqués à un étage modulateur, au
moyen d'un commutateur électronique. Avant d'être
mélangés aux signaux de luminance et de synchronisation
les signaux de chrominance sont appliqués à un filtre
limiteur de bande, réduisant le bruit de fond, du type
à courbe anti-cloche. Puis les signaux sont transmis
au dispositif récepteur, par exemple à l'aide d'un
câble.

Ces systèmes connus ont cependant un certain nombre
d'inconvénients. Ainsi, on constate un manque de définition de couleurs par exemple lors de la reproduction des signaux enregistrés, et provenant du fait que la bande passante de transmission de l'information de chrominance est de l'ordre de 300 kHz, donc très faible, ce qui est très insuffisant pour une définition de couleurs convenable.

En vue de résoudre le problème ci-dessus, un système de traitement de signaux de chrominance et de luminance issus par exemple d'une caméra de télévision en couleur a déjà été proposé .

Un tel système de traitement comporte des moyens générateurs de sous-porteuses de chrominance et de la porteuse de luminance constitués par trois oscillateurs dont au moins les oscillateurs-générateurs des sous-porteuses de chrominance sont adaptés pour produire des fréquences représentant un multiple des fréquences de sous-porteuses de chrominance classique du type SECAM, pour élargir la largeur de la bande de transmission d'information et pour permettre également la transmission de mots binaires, les oscillateurs étant synchronisés sur un même signal d'horloge de haute fréquence. On dispose ainsi à des bornes de sortie du dispositif de traitement d'un signal de porteuse modulée en fréquence par le signal de luminance $E'_Y$ et de sous-porteuses modulées en fréquence par les signaux de différence de couleur $D_R$ et $D_B$ (appelés couramment signaux de sous-porteuses de chrominance) et susceptibles d'être transmis parallèlement sur des voies correspondantes vers un dispositif récepteur.

Le système proposé comporte également trois convertisseurs analogique -numérique , chacun destiné au traitement d'un des trois signaux $D_R$, $D_B$ et $E'_Y$ et associés à des dispositifs d'élimination de parasites susceptibles d'être présents dans les signaux numériques en sortie des convertisseurs analogique -numérique et disponibles à des bornes de sortie du dispositif de traitement.

La présente invention a pour but de profiter de la qualité et de la haute résolution des signaux ci-dessus présents aux bornes de sortie du dispositif de traitement pour les enregistrer sur un support du dispositif d'enregistrement.

Pour cela, la présente invention concerne un système de traitement de signaux vidéo issus d'un dispositif de production tel qu'une caméra de télévision en couleur, un magnétoscope ou analogues, notamment du type SECAM, comprenant un dispositif émetteur relié en sortie du dispositif de production et transmettant parallèlement et simultanément à des bornes de sortie correspondantes un signal de porteuse modulée en fréquence par le signal de luminance $E'_Y$ et des sous-porteuses modulées en fréquence par les signaux de différence de couleurs $D_R$ et $D_B$ ; et au moins un dispositif récepteur tel qu'un dispositif d'enregistrement sur un support des signaux vidéo de sortie du dispositif émetteur, caractérisé en ce que le dispositif d'enregistrement comprend trois voies d'enregistrement, deux des voies recevant respectivement les signaux de sous-porteuses de chrominance $D_R$ et $D_B$ tandis que la troisième voie reçoit le signal d'information de luminance $E'_Y$, les signaux de sortie des trois voies d'enregistrement étant appliqués à un circuit de mixage dont la sortie est reliée à au moins un organe d'enregistrement des signaux vidéo sur le support d'enregistrement.

Selon une caractéristique de l'invention, chacune des voies d'enregistrement comprend, reliés en série, un moyen amplificateur, un moyen écréteur et un moyen de pré-accentuation dont les fonctionnements sont synchronisés par les signaux de synchronisation de ligne et de trame et éventuellement asservis par un même signal d'horloge haute fréquence.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemples illustrant plusieurs modes de réalisation de l'invention, et dans lesquels :

- la figure 1 est un schéma-bloc du dispositif émetteur traitant les signaux de chrominance et de luminance issus par exemple d'une caméra de télévision en couleur ;

- la figure 2 illustre sous forme de schéma-bloc un dispositif anti-copie ;

- la figure 3 montre schématiquement les signaux utilisés pour déterminer la période de présence du signal d'identification du contrôle de fonctionnement du commutateur électronique dans un récepteur de télévision couleur du type SECAM ;

- la figure 4 illustre l'emplacement de tops de synchronisation formés par des salves d'oscillations anti - copie ;

- La figure 5 est un schéma-bloc d'un dispositif de conversion ;

- la figure 6 est un schéma-bloc du dispositif d'enregistrement selon l'invention ;

- la figure 7 est un schéma-bloc d'un circuit de traitement des signaux numériques du dispositif émetteur.

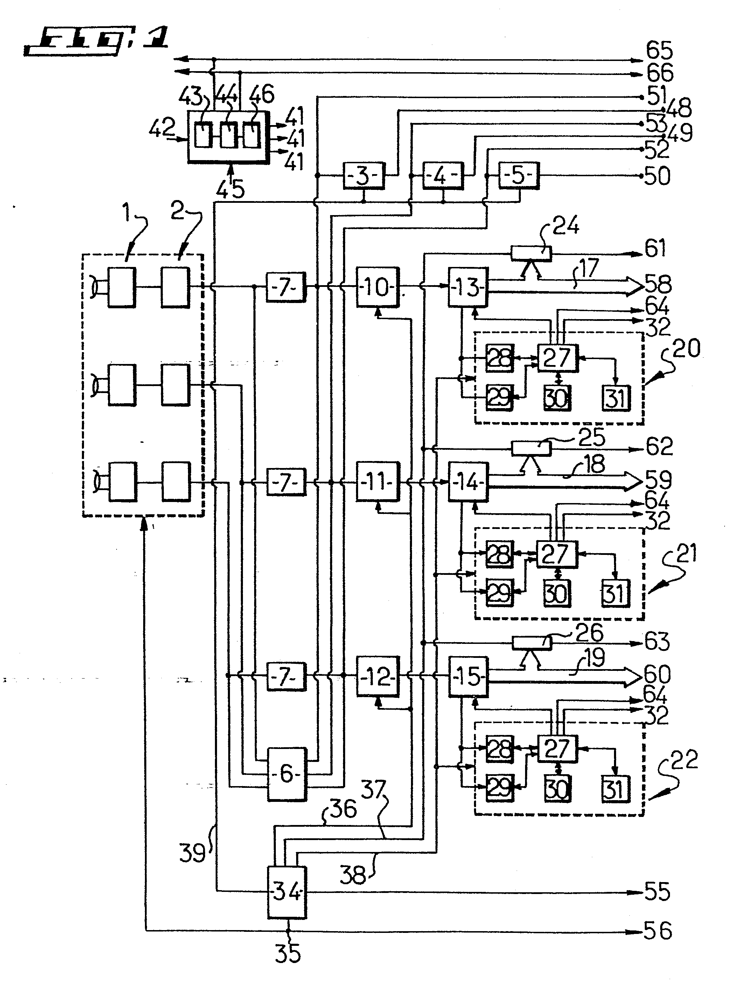

La figure 1 représente un mode de réalisation d'un dispositif de traitement de signaux de chrominance et de luminance issus par exemple d'un dispositif de prise de vue tel qu'une caméra de télévision en couleur, l'ensemble du dispositif de traitement et du dispositif de prise de vue étant par la suite appelé dispositif émetteur.

Dans le schéma représenté, on reconnaît en 1 le dispositif de prise de vue tel qu'une caméra de télévision en couleur et en 2 le dispositif des trois matrices destiné à produire à leur sortie les signaux de chrominance, c'est-à-dire de différence de couleur $D_R = E'_R - E'_Y$, $D_B = E'_B - E'_Y$ et le signal de luminance $E'_Y$ du type SECAM.

Le dispositif émetteur comporte trois oscillateurs 3, 4 et 5 avantageusement à quartz, qui sont contrôlés en tension. Les oscillateurs 3 et 5 sont destinés à produire respectivement des fréquences sous-porteuses pour les signaux de chrominance $D_R$ et $D_B$, tandis que l'oscillateur 4 engendre la porteuse du signal de luminance. Les oscillateurs 3 et 5 sont adaptés pour produire des sous-porteuses ayant des fréquences égales à un multiple des sous-porteuses classiques de 4,406 et 4,25 MHz du système SECAM. Le rapport des sous-porteuses engendrées par les oscillateurs 3 et 5 est identique au rapport des sous-porteuses classiques susmentionnées, pour assurer la compatibilité du système selon l'invention avec les systèmes classiques. Bien entendu, les sous-porteuses sont modulées en fréquence par les signaux $D_R$ et $D_B$.

Par l'utilisation de sous-porteuses de chrominance ou de couleur ayant une fréquence multiple par rapport aux sous-porteuses classiques, la bande passante de transmission de données est suffisamment large pour assurer une bonne définition des couleurs et pour permettre la transmission d'un ou de plusieurs mots binaires codés par exemple selon le mode "N.R.Z." (non retour à zéro), connu en soi et appliqué par exemple au système télétexte ANTIOPE. De plus, le traitement ultérieur appliqué à de telles sous-porteuses modulées en fréquence se limitera à des opérations de division de fréquence.

Comme le montre la figure 1, le dispositif émetteur comprend un dispositif anti-copie 6. Celui-ci comporte essentiellement un clavier 61 permettant le choix d'un top prédéterminé par l'actionnement par exemple d'une touche ou de plusieurs touches, une mémoire morte 62 ayant pour fonction de transformer l'information introduite à l'aide du clavier en un signal numérique présenté par exemple en parallèle aux sorties de la mémoire. Ces sorties sont reliées à un groupe d'entrées parallèles d'un multiplexeur 63 qui reçoit aux entrées d'un second groupe les sorties d'un diviseur de tension 64. Celui-ci produit à partir d'une fréquence d'horloge indiquée en 65 soit la même fréquence à toutes ces sorties soit des fréquence différentes et spécifiques de chacune de ces sorties.

Le multiplexeur produit à sa sortie une séquence de salves d'oscillations de la même fréquence ou de fréquences différentes, qui correspond au signal numérique à la sortie de la mémoire morte 62. Cette suite de salves d'oscillations est appliquée à un dispositif 66 qui est situé dans la voie des signaux provenant de la caméra 1, 2. Le dispositif 66 a pour fonction d'inhiber la transmission d'au moins une partie du signal d'identification destinée à contrôler la phase du commutateur électronique d'un dispositif récepteur du type SECAM classique.

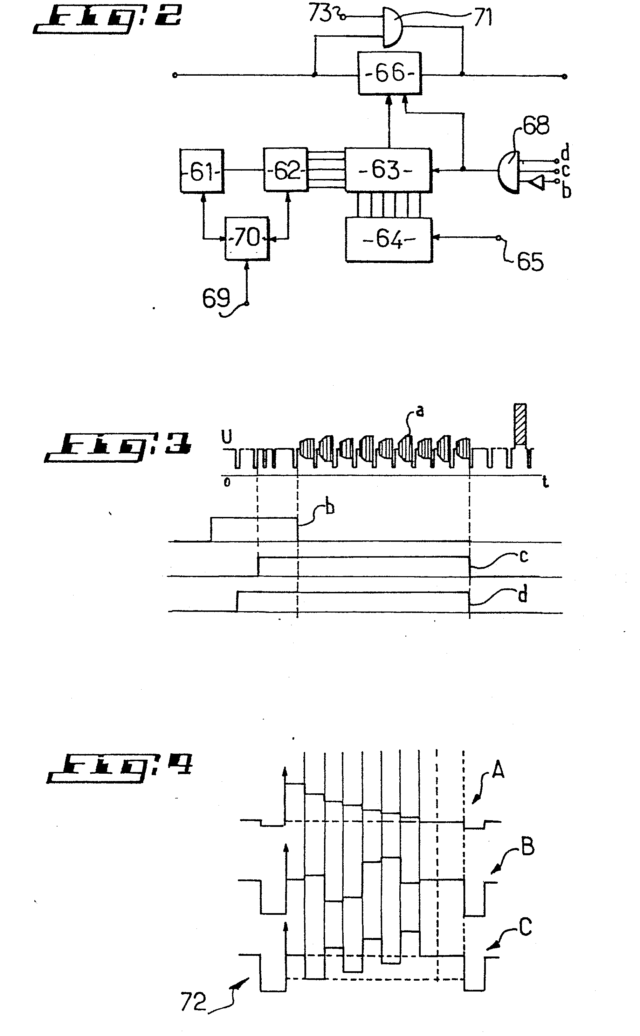

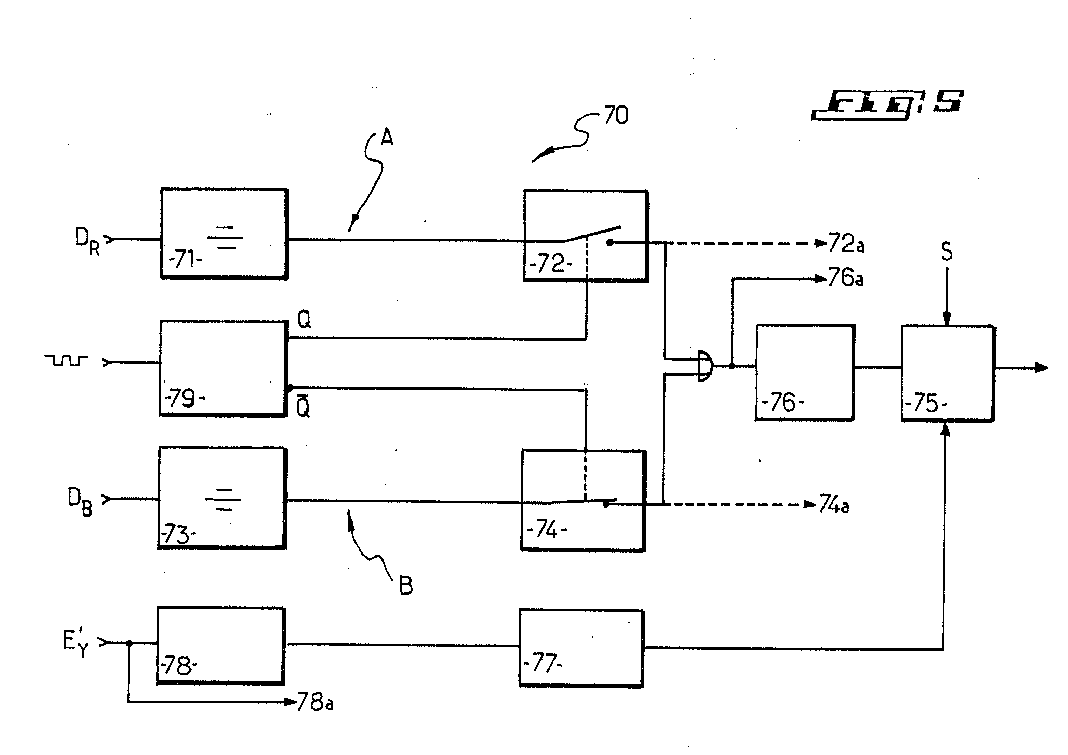

Le dispositif 66 et le multiplexeur sont commandés par un organe formant porte 68. Cette porte a trois entrées auxquelles sont appliqués les signaux b, c et d représentés à la figure 3. Ces signaux sont produits dans le codeur du type SECAM et représentent respectivement la porte des fréquences ligne double, l'emplacement d'identification trame et ligne et la porte d'identification. En a, on a représenté à la figure 3 de façon schématique le signal d'identification de contrôle du commutateur électronique que remplace au moins en partie les salves d'oscillations anti-copie. On constate que la période de présence du signal d'identification a se définit par le fait que les signaux c et d sont à l'état "1" et le signal en b est à l'état "0". En inversant le signal b, on peut donc déterminer la période de présence du signal d'identification a à l'aide d'une porte ET comme cela est fait à la figure 2.

Concernant le fonctionnement des moyens qui viennent d'être décrits, il est à noter que les oscillations anti-copie présentent une fréquence située en dehors de la bande passante réservée au signal d'identification prévu dans les récepteurs du type SECAM classique. Il est possible d'enregistrer les signaux produits par la caméra 1 et 2 une première fois par exemple sur une bande magnétique. Mais si on voulait faire de ce premier enregistrement un second enregistrement, c'est-à-dire une copie, la qualité de cette dernière serait insuffisante et donnerait lieu à une reproduction de mauvaise qualité car lors de la reproduction à partir de la copie le fonctionnement correct du commutateur SECAM ne serait plus assuré. Concernant la fréquence des oscillations anti-copie, celles-ci pourraient avantageusement avoir la fréquence des oscillations produites par les oscillations de sous-porteuses et de porteuses 3, 4 et 5 dont la fréquence est égale à un multiple de la fréquence des sous-porteuses SECAM classiques.

Il ressort des remarques précédentes que l'insertion d'un
code anti-copie formé par des salves d'oscillations
ayant une fréquence en dehors de la bande passante des
récepteurs classiques, dans les séquences des signaux
fournies par la caméra ou toute autre source de signaux
de télévision couleur contrarie toute activité d'enregistrement frauduleuse. D'autre part, la présence des
signaux de code anti-copie dans les séquences de signaux
d'origine et ainsi sur le support d'enregistrement
d'origine permet d'assurer que cet enregistrement est un
original et non pas une copie.

Il est encore à noter que ce dispositif anti-copie est
adapté pour permettre sa connexion à un dispositif
externe. A cette fin, on a prévu une entrée 69 associée
à une unité de traitement 70 coopérant et agissant, le
cas échéant, avec le clavier 61 et la mémoire morte 62.
Il est encore à noter que le dispositif anti-copie permet également d'inscrire dans des trames des numéros
qui permettent d'identifier celles-ci.

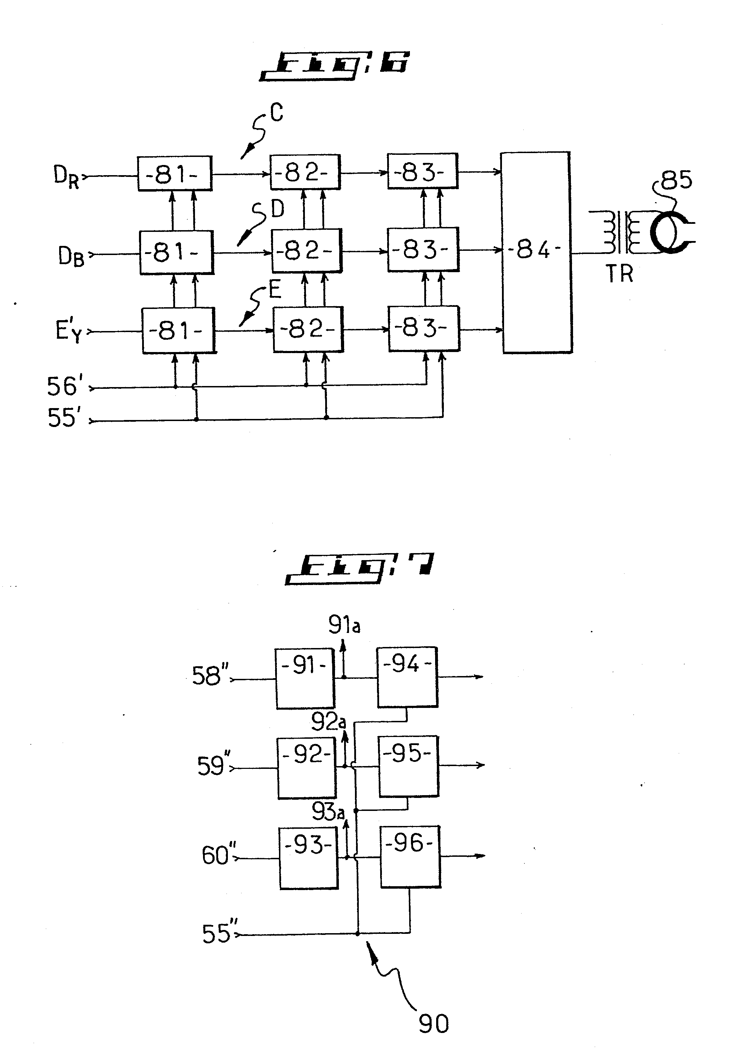

Suivant la figure 2, le dispositif anti-copie 6 comprend
un autre organe ou circuit 71 permettant d'accomplir une
fonction anti-copie. Comme le montre la figure 4, qui
constitue un oscillogramme d'une même ligne qui correspond à la mire de barres de 75 % d'amplitude pour les
couleurs blanc, jaune, bleuté en vert, vert, pourpré,
rouge, bleu et noir (de gauche à droite), chaque signal
en A, B et C est précédé par un top de synchronisation
72 qui descend en dessous des niveaux minimum possibles
de chaque signal. Or l'organe 71 est adapté pour former
les tops de synchronisation 72 d'une salve d'oscillations d'une fréquence qui se trouve en dehors de la bande de
fréquence passante des dispositifs récepteurs SECAM classiques.
Ces oscillations pourraient être les sous-porteuses produites par
les oscillateurs 3, 5 à la fréquence d'un multiple des fréquences sous-porteuses SECAM classiques. L'organe 71 pourrait être constitué par tout circuit approprié pouvant par exemple exécuter la fonction d'une porte ET à deux entrées prévue respectivement pour la réception d'une porte de synchronisation et en 73 de salves d'oscillations.

Dans ce dernier cas encore, du fait que les oscillations anti-copie se trouvent en dehors de la bande passante du dispositif récepteur, les copies faites à partir d'un premier enregistrement ne permettraient plus une reproduction de bonne qualité en raison d'une perte de synchronisme augmentant rapidement de copie en copie.

Le dispositif émetteur représenté comprend en outre trois convertisseurs analogique -numérique 10, 11, 12 chacun étant destiné au traitement d'un des trois signaux $D_R$, $D_B$ et $E'_Y$. Chaque convertisseur est relié à la sortie d'une des trois matrices de la caméra de télévision soit au moyen du dispositif 7 soit par l'intermédiaire des dispositifs anti-copie 6. En aval de chaque convertisseur 10 à 12 on constate la présence d'un circuit d'aiguillage respectivement 13, 14 et 15 reliant le convertisseur auquel il est associé à un bus de données de sortie 17, 18 et 19 soit directement soit par l'intermédiaire d'un dispositif d'élimination de parasites 20, 21 ou 22. Etant donné que sur chaque bus les signaux numériques en code binaire produits par le convertisseur analogique - numérique 10, 11 ou 12 correspondant sont présents suivant une constellation en parallèle, on prévoit pour chacun des bus de données un convertisseur parallèle-série 24, 25 ou 26 destiné à convertir la constellation en parallèle en une constellation de signaux en série.

Chacun des dispositifs d'élimination de parasites 20, 21 et 22 comprend une unité de traitement 27 tel qu'un micro-ordinateur ou microprosesseur, deux mémoires vives 28, 29 destinées à stocker respectivement la trame entière qui est en train d'être produite par la caméra et la trame précédente, ainsi qu'une mémoire morte 30 contenant la routine pour l'unité de traitement. Cette dernière peut également être programmée pour assurer la production d'une tension continue d'alimentation très stable, à l'aide de moyens convertisseurs numérique - analogique 31 à partir d'un chiffre binaire préalablement défini. Cette tension continue peut servir de tension de référence pour le système d'alimentation des différents éléments du dispositif de traitement et notamment pour la production de l'alimentation des oscillations 3, 4 et 5, à la manière décrite. La borne de sortie de cette tension est appliquée en 32.

Le dispositif d'élimination de parasites peut également être pourvu de moyens connus en soi permettant la correction d'erreurs contenues dans les signaux numériques portant sur plusieurs éléments binaires par exemple en assurant la présence d'un nombre prédéterminé d'états binaires dans chaque signal numérique. Le dispositif de traitement 27 permet l'accomplissement de cette fonction connue en soi. L'unité de traitement peut encore être adaptée pour produire un signal indicateur d'absence d'erreur dans les signaux numériques.

Concernant la coopération des convertisseurs analogique - numérique 10 à 12 et du dispositif anti-copie, il est à noter que les codes anti-copie pourraient déjà être insérés dans la séquence de signaux de chrominance et de luminance en forme numérique. Dans ce cas, le dispositif anti-copie 6 commanderait l'inhibition des convertisseurs pendant les intervalles de temps correspondants, c'est-à-dire provoquerait le libre passage des parties de séquence occupées par ce code, à travers les convertisseurs.

Pour assurer un parfait synchronisme du fonctionnement des différents éléments du dispositif émetteur, celui-ci comprend un oscillateur à quartz 34 constituant un générateur de signaux de haute fréquence, par exemple de l'ordre de 100 MHz. Cet oscillateur accomplit la fonction d'une horloge générale. Comme le montre la figure 1, les signaux de synchronisation de ligne et de trame et de demi-ligne disponibles en 35 sont dérivés de l'horloge générale. Les convertisseurs analogique - numérique 13 à 15, les convertisseurs parallèle -série 24 à 26 et les dispositifs d'élimination de parasites 20 à 22 sont également asservis à l'horloge. Les conducteurs des signaux d'horloge pour la commande de ces éléments sont indiqués respectivement en 36, 37 et 38. En 39, l'horloge générale 34 fournit les signaux de synchronisation des oscillateurs de sous-porteuses et de porteuse 3, 4, 5 . Le synchronisme de ces oscillateurs est ainsi garanti par le fait que les signaux de synchronisation sont dérivés du même signal de haute fréquence. Il est à souligner que tous les signaux de synchronisation et de référence sont obtenus par division de la fréquence du signal d'horloge, ce qui garantit une stabilité parfaite des signaux ainsi obtenus et un synchronisme parfait de fréquence et de phase des oscillateurs 3, 4 et 5, et des signaux, c'est-à-dire de leur front avant, et ainsi de toutes les opérations effectuées par le système de traitement selon la présente invention. Pour assurer la stabilité de la fréquence de l'oscillateur d'horloge 34, par exemple pour empêcher toute dérivation thermique, cet oscillateur est monté dans une boucle de stabilisation (non représentée), comportant également les oscillateurs 3, 4 et 5.

Le dispositif d'alimentation en tension continue, désigné par le chiffre de référence 40 peut également être conçu pour produire des tensions d'alimentation extrêmement stables pour les oscillateurs de sous-porteuses et de porteuse 3, 4 et 5. Ces tensions sont disponibles aux trois bornes de sortie 41 du dispositif d'alimentation. Comme cela est schématiquement indiqué sur la figure 1, les moyens générateurs des tensions d'alimentation des oscillateurs sont avantageusement dérivés du signal d'horloge de haute fréquence produit par l'horloge générale 34. Le dispositif d'alimentation 40 reçoit en 42 ce signal d'horloge de par exemple 100 MHz. Dans le dispositif 40 ce signal est divisé par un diviseur de fréquence schématiquement indiqué en 43 qui en produit un signal de par exemple 1 MHz. Celui-ci est appliqué à un amplificateur saturé 44 fonctionnant en régime de tout ou rien et alimenté de son côté par la tension continue très stable produite en 32 par l'un des dispositifs d'élimination de parasites 20, 21 ou 22. Un convertisseur 45 transforme le signal de sortie de l'amplificateur en une tension continue disponible aux sorties 41. Cette tension est parfaitement stable du fait qu'elle est dérivée de la fréquence d'horloge par division de fréquence, ce qui garantit déjà un haut degré de stabilité et de la tension très stable produite par les dispositifs d'élimination de parasites à partir d'un chiffre binaire. L'amplitude de la tension de sortie est ainsi rigoureusement contrôlable. Il est encore à noter que le dispositif d'alimentation 40 est galvaniquement séparé du secteur par l'intermédiaire d'un transformateur (non représenté).

En se reportant à la figure 1, on constate que le dispositif de traitement comporte aux bornes de sortie 48 à 50 des signaux de sortie des oscillations 3, 4 et 5, c'est-à-dire des sous-porteuses modulées par les signaux de chrominance et de la porteuse modulée par le signal de luminance. Des bornes de sortie 51, 50 et 52 sont prévues auxquelles peuvent être prélevés les signaux de chrominance et de luminance tels qu'ils ont été produits par la caméra de télévision en couleur. Le système comporte en outre des bornes de sortie 55, 56 auxquelles le signal d'horloge haute fréquence, produit par l'oscillateur 34 et les signaux de synchronisation de ligne et de trame et de demi-ligne peuvent être prélevés. Les symboles de référence 58 à 60 indiquent les bornes de sortie des bus de données 17 à 19 tandis qu'aux bornes 61 à 63 sont disponibles les signaux numériques en constellation en série. Le signal d'absence d'erreur est présent à la sortie 64. Les bornes 65 et 66 sont associées au dispositif d'alimentation 40 et désignent la masse et le potentiel d'alimentation.

Toutes les sorties susmentionnées ou au moins une partie essentielle de celles-ci peuvent être reliées à une prise du genre multibroche connectable à un dispositif récepteur tel que par exemple un appareil de télévision en couleur standard, moniteur pour contrôle visuel et analogues. En prévoyant également une prise par exemple du type multibroche au côté entrée, le système peut constituer une unité autonome susceptible d'être montée entre une caméra de télévision en couleur et un dispositif récepteur approprié. Mais, il serait également possible d'insérer ce dispositif avec la caméra et le dispositif récepteur tel qu'un magnétoscope dans une même boîte pour former un genre de télécinéma, un ensemble de copies de film ou de documents quelconques.

Le fonctionnement du dispositif émetteur ressort immédiatement de la description qui vient d'être faite et de la figure . Il n'est donc pas nécessaire de le décrire, à l'exception du fonctionnement des dispositifs d'élimination des parasites. Chacun de ces dispositifs fonctionne de la manière suivante :

Pour éliminer les parasites, l'unité de traitement 27, sous la commande de la routine stockée dans la mémoire morte compare chaque trame à la trame précédente. Ces trames sont stockées respectivement dans les mémoires vives 28, 29. A la suite de cette opération de comparaison, tous les éléments d'image qui sont communs aux deux trames seront conservés. Par contre, les éléments non identiques seront éliminés. Il est à noter que les deux trames sont décalées dans le temps de 20 millisecondes. Les éléments représentatifs de parasites ne seront donc généralement plus les mêmes dans les deux trames. Par une programmation appropriée relativement simple, l'unité de traitement peut être adaptée pour distinguer une différence dans les deux trames, produites par un objet qui se déplace devant la caméra, d'une différence occasionnée par des parasites. En effet, l'objet en déplacement conserve son contour.général, c'est-à-dire les éléments d'image qui le représentent conservent sensiblement leurs formes. Ils ont seulement changé de place sur les deux trames. Cette non-altération de la forme générale des éléments d'image et représentative d'un objet en déplacement, d'une trame à la trame suivante, permet de distinguer des parasites qui sont aléatoires et donc en principe toujours différents d'une trame à l'autre. On comprend aisément que le dispositif d'élimination de parasites peut être rendu encore plus sophistiqué et sensible à des paramètres particuliers en le reliant à un calculateur externe programmé en conséquence.

Bien entendu, le dispositif émetteur tel qu'il est représenté sur la figure 1 et tel qu'il vient d'être décrit peut être modifié de diverses manières. Ainsi les signaux de chrominance et de luminance n'ont pas besoin d'être pris à la sortie de la caméra. Ils peuvent être issus de tout autre dispositif tel qu'un magnétoscope. On pourrait également envisager d'appliquer aux oscillateurs générateurs des sous-porteuses 3 et 5 non pas les signaux de chrominance dans leur version analogique, mais dans leur forme numérique obtenue aux sorties des convertisseurs analogique -numérique 10 à 13 et le cas échéant après le traitement par les dispositifs d'élimination de parasites. On obtiendrait de cette manière des signaux de sortie débarrassés de parasites aléatoires. Il est encore une fois à souligner que le choix des fréquences de sous-porteuse devrait être fait de telle manière que toutes les informations et signaux dérivés puissent être transmis et traités de façon qu'ils présentent une haute définition et soient conservés dans l'état d'origine sans subir pratiquement aucune détérioration. Le système pourrait permettre la transmission des signaux numériques de tout code approprié, par exemple des signaux du type "N.R.Z." (non retour à zéro), tels que les signaux appliqués pour le système ANTIOPE.

La figure 5 représente un mode de réalisation sous forme de schéma-bloc d'un circuit de conversion des signaux vidéo disponibles aux bornes de sortie 48, 49 et 50 du dispositif émetteur pour leur transmission de façon compatible vers un dispositif récepteur (non représenté) du type SECAM classique tel qu'un récepteur de télévision en couleur ou analogue.

Un tel circuit 70 comprend une première voie de traitement A du signal de sous-porteuse de chrominance $D_R$ disponible à la sortie 48 du dispositif émetteur et constituée par la mise en série d'un diviseur 71 recevant le signal de sous-porteuse de chrominance $D_R$ et d'un élément de commutation 72 tel que par exemple un commutateur analogique. Le circuit 70 comprend également une deuxième voie de traitement B du signal de sous-porteuse de chrominance $D_R$ disponible à la sortie 50 du dispositif émetteur et constituée, de façon identique à la première voie, par la mise en série d'un diviseur 73 recevant le signal de sous-porteuse de chrominance $D_B$ et d'un élément de commutation 74 tel que par exemple un commutateur analogique.

Les sorties des éléments de commutation 72 et 74 sont
reliées à un circuit mélangeur 75 par l'intermédiaire
d'un circuit anti-cloche 76 ou de mise en forme de la
sous-porteuse qui lui est appliquée pour assurer éventuellement une protection supplémentaire contre le
bruit. Il est à noter que les sorties des éléments 72
et 74 sont reliées au circuit 76 par l'intermédiaire
d'une porte logique OU. Le circuit mélangeur 75 permet
d'élaborer le vidéo-signal composite et on lui transmet
pour cela le signal de luminance démodulé par un discriminateur 77 dont l'entrée est reliée à la sortie d'une
ligne à retard 78 nécessaire pour assurer dans le mélangeur sa coïncidence correcte dans le temps avec les
signaux de différence de couleur, la ligne à retard 78
recevant à son entrée l'information de luminance disponible à la borne de sortie 49 du dispositif émetteur ;
le mélange séquentiel à la demi-fréquence de ligne des
sous-porteuses modulées respectivement par les signaux
de différence de couleur $D_R$ et $D_B$, y compris les signaux
d'identification ; et le train de signaux de synchronisation S de lignes et de trames et de demi-ligne disponibles à la borne de sortie 56 du dispositif émetteur.
Le signal vidéo composite ainsi obtenu peut alors être
envoyé par voie aérienne de façon connue en soi vers le
dispositif récepteur ou par l'intermédiaire d'un câble
de liaison du dispositif émetteur au dispositif récepteur.

Afin de permettre la transmission séquentielle des
signaux vidéo $D_R$ et $D_B$ disponibles en parallèle aux
bornes de sortie 48 et 50 du dispositif émetteur un
organe de commande 79 tel que par exemple une bascule
du type J-K effectue le basculement à la fréquence de
ligne des éléments de commutation 72 et 74 de chacune
des voies A et B. La sortie Q de la bascule 79 est reliée à l'entrée de commande de l'élément de commutation 72 tandis que la sortie complémentée $\overline{Q}$ est reliée à l'entrée de commande de l'élément de commutation 74. L'entrée horloge de la bascule 79 reçoit les signaux de synchronisation de ligne issus du dispositif émetteur et dont le front descendant avant effectue, à la fréquence de ligne, un changement d'état aux sorties Q et $\overline{Q}$ de la bascule comme représenté à la figure 4. On comprend donc que les éléments de commutation 72 et 74 basculent à la fréquence de ligne et transmettent alternativement vers le mélangeur le signal vidéo $D_R$ pendant la durée d'une ligne (état fermé de l'interrupteur du commutateur 72), puis le signal vidéo $D_B$ pendant la durée de la ligne suivante (état fermé de l'interrupteur du commutateur 74 alors que celui du commutateur 72 est ouvert), et ainsi de suite.

Le circuit de conversion selon la présente invention permet donc d'assurer efficacement la transmission du mode simultané en mode séquentiel des signaux vidéo disponibles en sortie du dispositif émetteur et ce sans perte d'information.

La figure 6 représente un mode de réalisation du dispositif d'enregistrement selon l'invention des signaux vidéo présents au circuit de conversion de la figure 5.

Ce dispositif d'enregistrement comprend trois voies d'enregistrement C, D et E recevant respectivement et simultanément le signal de chrominance $D_R$, le signal de chrominance $D_B$ et le signal de luminance $E'_Y$. Les signaux de chrominance $D_R$ et $D_B$ sont prélevés soit à la sortie de la porte OU (BORNE 76a) de la figure 5, soit directement aux sorties des éléments de commutation 72 et 74 (BORNES 72a, 74a), tandis que le signal de luminance est prélevé à l'entrée de la ligne à retard 78 (Borne de sortie 78a). La liaison entre les bornes d'entrée des voies d'enregistrement C, D et E du dispositif d'enregistrement et les bornes de sortie auxquelles sont prélevés les signaux peut être réalisée par l'intermédiaire d'un câble à prise multiple-broches à chacune de ses extrémités.

Les voies d'enregistrement sont constituées chacune par la liaison en série d'un amplificateur 81 recevant le signal vidéo correspondant, d'un moyen écréteur 82 du signal de sortie de l'amplificateur et d'un moyen de préaccentuation 83 des fréquences élevées. Les signaux en modulation de fréquence de la luminance et de la chrominance disponibles aux sorties des moyens de préaccentuation 83 sont ensuite mélangés dans le circuit de mixage ou circuit mélangeur 84 dans une certaine proportion, un amplificateur de courant (non représenté) étant relié en sortie du mélangeur et transmettant les signaux vidéo vers les bobinages d'au moins un organe d'enregistrement 85 telle qu'une tête vidéo magnétique par l'intermédiaire d'un transformateur rotatif TR.

Selon les systèmes existants une seule tête vidéo peut être utilisée pour l'enregistrement d'une trame complète sur une seule piste d'un support magnétique tel qu'une bande magnétique, ou bien deux têtes magnétiques diamétralement opposées sont nécessaires, l'une inscrivant une trame complète sur une piste vidéo tandis que l'autre tête inscrit une autre trame sur la piste suivante. Il est possible également d'enregistrer les signaux vidéo sur un disque magnétique selon des méthodes connues en soi et sortant du cadre de l'invention.

Les signaux vidéo disponibles en sortie du circuit mélangeur, au lieu d'être enregistrés sur un support magnétique, peuvent être enregistrés sur un vidéodisque et ils sont envoyés pour cela vers un modulateur optique d'un rayonnement Laser, le modulateur agissant sur un objectif asservi situé au-dessus du vidéodisque comme cela est connu en soi.

Les moyens 81-83 utilisés dans chacune des voies d'enregistrement sont synchronisés par les signaux de synchronisation de ligne et de trame tels que ceux disponibles à la borne de sortie 56 du dispositif émetteur et appliqués à la borne d'entrée 56', et sont éventuellement asservis par un même signal d'horloge haute fréquence en 55' tel que par exemple celui disponible à la borne de sortie 55 du dispositif émetteur.

Les signaux de synchronisation de ligne et de trame sont également utilisés pour assurer l'asservissement nécessaire du système mécanique du dispositif d'enregistrement à savoir les moteurs de cabestan et de la tête vidéo dans les magnétoscopes à têtes rotatives ou les moteurs de l'équipage mobile et du disque dans le cas d'un dispositif d'enregistrement à vidéodisque.

Il va de soi que les signaux anti-copie tels qu'insérés dans les signaux vidéo comme déjà expliqué précédemment sont également enregistrés sur le support d'enregistrement à travers les trois voies d'enregistrement.

Par le dispositif d'enregistrement selon l'invention, il est possible de surveiller l'enregistrement des signaux vidéo sur le support en visualisant ces signaux sur un moniteur de contrôle (non représenté) recevant les signaux composites disponibles en sortie du circuit mélangeur 75 de la figure 5. Bien entendu, le dispositif de la figure 6 est incorporé dans l'appareil d'enregistrement tel que le magnétoscope ou l'appareil à vidéodisque et l'ensemble des éléments 78, 77, 76 et 75 de la figure 5 peut également être incorporé dans l'appareil d'enregistrement de manière à bénéficier à partir de celui-ci d'une prise de sortie de signaux vidéo-composite
pour le moniteur de contrôle.

Au dispositif d'enregistrement de la figure 6 peut être
associé un dispositif de sélection (non représenté)
automatique ou manuel d'au moins l'une des voies
d'enregistrement C, D ou E. Un tel dispositif peut agir
par exemple sur des commutateurs du type analogique
reliés en sortie des moyens de préaccentuation 83 et
empêchant la transmission d'au moins l'un des signaux
présents aux entrées de chacun des moyens amplificateurs
81. L'utilisation éventuelle d'une seule voie d'enregistrement par le dispositif de sélection, par exemple la
voie C, permet le stockage de documents grâce à la haute
définition de l'image, la composante rouge de l'information vidéo étant alors seule enregistrée.

Les signaux numériques apparaissant suivant une constellation à série respectivement aux bornes 61, 62 et 63
du dispositif émetteur peuvent être enregistrés directement et séparément sur un support d'enregistrement après
les avoir traités éventuellement à travers leurs voies
d'enregistrement comprenant en série un moyen amplificateur, un moyen écréteur et un moyen de préaccentuation
comme pour les voies d'enregistrement de la figure 6.
Ces signaux vidéo sous forme numérique sont enregistrés
séparément sur trois pistes différentes d'un support
d'enregistrement qui peut être soit du type magnétique
soit du type optique. Les techniques d'enregistrement
sur plusieurs pistes sont connues en soi et n'ont pas
besoin d'être décrites. Il va de soi que les signaux
anti-copie présents dans les signaux numériques sont
également enregistrés sur le support.

La figure 7 représente sous forme de schéma-bloc un
dispositif de traitement 90 des signaux vidéo sous forme numérique apparaissant suivant une constellation en parallèle aux bornes de sortie 58, 59 et 60 du dispositif émetteur.

Comme montré sur cette figure, ces signaux présents aux
bornes d'entrée 58", 59" et 60" sont convertis sous
forme analogique par les convertisseurs numérique -
analogique 91, 92 et 93. Les signaux vidéo-analogiques
disponibles sont prélevés en sortie de ces convertisseurs
aux bornes 91a-93a et sont enregistrés directement et
séparément sur trois pistes différentes du support d'enregistrement du type magnétique ou optique, ces signaux
comprenant également les signaux anti-copie.

Les sorties des convertisseurs numérique -analogique
91-93 sont respectivement reliées aux entrées d'oscillateurs 94-96 par exemple à quartz et qui sont contrôlés
en tension. Les oscillateurs 94 et 95 sont destinés à
produire respectivement des fréquences porteuses pour
les signaux de chrominance $D_R$ et $D_B$ en sortie des
convertisseurs numérique -analogique 91 et 92, tandis
que l'oscillateur 96 engendre la porteuse du signal de
luminance disponible en sortie du convertisseur
numérique-analogique 96. Les oscillateurs peuvent être
adaptés pour produire des sous-porteuses ayant des
fréquences égales à un multiple des sous-porteuses
classiques de 4, 406 et 4,25 MHz du système SECAM. Bien
entendu, le rapport des sous-porteuses engendrées par
les oscillateurs 94 et 95 doit être identique au rapport
des sous-porteuses classiques susmentionné . Comme déjà
expliqué précédemment, l'utilisation des sous-porteuses
de chrominance ayant une fréquence multiple par rapport
aux sous-porteuses classiques permet d'assurer une bonne
définition des couleurs lors d'une reproduction ultérieure des signaux enregistrés sur un récepteur de télévision en couleur.

De plus, les signaux vidéo envoyés au dispositif 90 sont exempts de parasites puisqu'ils ont été traités par les dispositifs d'élimination de parasites 20-22 du dispositif émetteur, ce qui garantit davantage une haute qualité de ces signaux. Il est à souligner qu'au lieu de prélever les signaux vidéo $D_R$, $D_B$ et $E'_Y$ de sortie de la caméra de télévision en couleur, il est possible de prélever ceux préenregistrés sur un support tel qu'une bande magnétique d'une cassette vidéo ou un vidéodisque, de leur faire subir le traitement d'élimination de parasite par les circuits 20-22 et de les réenregistrer après correction et inscription dans les signaux vidéo du code anti-copie. Cette opération de traitement a pour avantage d'améliorer la qualité de signaux préenregistrés comportant des parasites.

Afin d'être enregistrés de la même manière que les signaux vidéo disponibles aux bornes de sortie 48-50 du dispositif émetteur, les signaux vidéo en sortie des oscillateurs 94 et 95 sont soit appliqués directement aux entrées des éléments de commutation 72 et 74 de la figure 5, soit appliqués aux entrées des diviseurs 71 et 73 si les sous-porteuses sont multipliées, le signal de luminance disponible en sortie de l'oscillateur 96 étant appliqué directement à l'entrée de la voie d'enregistrement E de la figure 6. Bien entendu, les oscillateurs 94-96 sont mis au pas par un même signal d'horloge de haute fréquence tel que celui disponible en sortie 55 du dispositif émetteur et reçoivent également les signaux de synchronisation de ligne et de trame. Les tensions disponibles aux bornes de sortie 32 du dispositif émetteur sont utilisées également pour référencer les oscillateurs 94-96 afin qu'ils oscillent à une fréquence précise $f_0$ et qu'ils reviennent toujours à cette fréquence après modulation.

La façon dont sont aiguillés les signaux vidéo disponibles aux différents groupes de bornes de sortie (48, 49, 50) ; (61, 62, 63) ; (58, 59, 60) vers les dispositifs des figures 5, 6 et 7 et de ces dispositifs vers les dispositifs d'enregistrement et éventuellement vers le dispositif récepteur, peut être réalisée à partir d'une unité de contrôle par exemple à microprocesseur.

Il est également à noter que le signal d'absence d'erreur disponible aux sorties 64 peut être exploité dans une unité centrale qui peut éventuellement arrêter le fonctionnement de l'ensemble du dispositif d'enregistrement quand au moins une erreur dans les signaux numériques est décelée.

La présente invention permet donc d'une façon générale l'enregistrement d'une bonne qualité et avec une haute définition des signaux de sous-porteuses de chrominance et de luminance apparaissant simultanément aux sorties d'un dispositif de traitement de signaux vidéo provenant d'une source quelconque telle qu'une caméra de télévision couleur ou un dispositif de restitution (magnétoscope, appareil de vidéodisque).

Revendications

1. Système de traitement de signaux vidéo issus d'un dispositif de production tel qu'une caméra de télévision en couleur, magnétoscope ou analogues, notamment du type SECAM, comprenant un dispositif émetteur relié en sortie du dispositif de production et transmettant parallèlement et simultanément à des bornes de sortie correspondantes un signal de porteuse modulée en fréquence par le signal de luminance $E'_Y$ et des sous - porteuses modulées en fréquence par les signaux de différence de couleur $D_R$ et $D_B$, les sous-porteuses ayant des fréquences égales à un multiple des sous - porteuses classiques ; et au moins un dispositif récepteur tel qu'un dispositif d'enregistrement sur un support des signaux vidéo de sortie du dispositif émetteur, caractérisé en ce que le dispositif d'enregistrement comprend trois voies d'enregistrement (C, D et E), deux (C, D) des voies recevant respectivement les signaux de sous-porteuses de chrominance $D_R$ et $D_B$ tandis que la troisième voie(E)reçoit le signal d'information de luminance $E'_Y$, les signaux de sorties des trois voies d'enregistrement étant appliqués à un circuit de mixage (84)sont la sortie est reliée à au moins un organe d'enregistrement(85)des signaux vidéo sur le support.

2. Système selon la revendication 1, caractérisé en ce que chacune des voies précitées comprend, reliés en série, un moyen amplificateur (81), un moyen écréteur (82) et un moyen de préaccentuation (83) dont les fonctionnements sont synchronisés par les signaux de synchronisation de ligne et de trame et éventuellement asservis par un même signal d'horloge de haute fréquence.

3. Système selon la revendication 1 ou 2, caractérisé en ce qu'entre les bornes de sortie (48), (49) du dispositif émetteur et les deux voies d'enregistrement(C)
(D)est disposé un circuit de conversion (70), à la fréquence de ligne, du mode de transmission parallèle en
mode de transmission séquentiel des signaux de sous-
porteuses de chrominance $D_R$, $D_B$, le circuit de conversion ayant deux voies parallèles de traitement (A, B) de
manière à faire ainsi alternativement passer à la sortie
de l'une des voies le signal vidéo $D_R$ pendant la durée
d'une ligne, puis, à la sortie de l'autre voie le signal
vidéo $D_B$ pendant la durée de la ligne suivante.

4. Système selon la revendication 3, caractérisé en ce
que chacune des voies de traitement (A, B) précitées
comprend un élément de commutation (72, 74) actionné par
un organe de commande (79) à la fréquence de ligne.

5. Système selon la revendication 4, caractérisé en ce
que l'organe de commande (79) précité est une bascule
dont l'entrée horloge reçoit les signaux de synchronisation de
lignes, et dont la sortie directe (Q) est reliée à l'entrée de
commande de l'un des éléments de commutation (72) tandis
que la sortie complémentée ($\overline{Q}$) est reliée à l'entrée de
commande de l'autre élément de commutation (74).

6. Système selon la revendication 5, caractérisé en ce
que la bascule (79) précitée est une bascule du type
J et K.

7. Système selon l'une des revendications précédentes,
caractérisé en ce que chacune des voies de traitement
A et B précitées comprend en série avec chaque élément
de commutation (72 ; 74) un diviseur de fréquence (71 ;
73) recevant le signal de sous-porteuses de chrominance
correspondant.

8. Système selon l'une des revendications précédentes, caractérisé en ce que les deux éléments de commutation (72 et 74) précités sont des commutateurs analogiques.

9. Système selon l'une des revendications précédentes, caractérisé en ce que les sorties des éléments de commutation (72, 74) du circuit de conversion (70) sont multiplexées par l'intermédiaire d'une porte OU vers un circuit mélangeur (75) recevant également, d'une part, par l'intermédiaire d'un circuit série comprenant une ligne à retard (78) et un circuit discriminateur (77) le signal de luminance disponible à la borne de sortie (49), et, d'autre part, les signaux de synchronisation issus de la borne de sortie (56) du dispositif émetteur, le circuit mélangeur (75) produisant un signal vidéo - composite pour la visualisation et le contrôle à un dispositif récepteur tel qu'un moniteur ou récepteur de télévision couleur du signal vidéo enregistré sur le support d'enregistrement précité.

10. Système selon l'une des revendications précédentes, caractérisé en ce que l'organe d'enregistrement (85) précité est une tête magnétique rotative associée au support d'enregistrement telle qu'une bande magnétique ou disque magnétique.

11. Système selon l'une des revendications 1 à 9, caractérisé en ce que l'organe d'enregistrement (85) précité est un modulateur optique à rayonnement Laser associé au support d'enregistrement tel qu'un disque optique.

12. Système selon l'une des revendications précédentes, caractérisé en ce qu'il comprend un dispositif de sélection automatique ou manuel d'au moins l'une des voies d'enregistrement (C, D et E)

13. Système selon la revendication 1, caractérisé en ce que les signaux de chrominance et de luminance présents sous forme numérique suivant une constellation en série aux bornes de sortie (61, 62) et (63) du dispositif émetteur sont directement et séparément enregistrés sur trois pistes différentes magnétiques ou optiques du support d'enregistrement.

14. Système selon la revendication 1, caractérisé en ce que les signaux de chrominance et de luminance présents sous forme numérique suivant une constellation en parallèle aux bornes de sortie (58), (59) et (60) sont appliqués respectivement à trois convertisseurs numériques - analogiques (91, 92) et (93) dont les sorties sont reliées respectivement à trois organes d'enregistrement telles que des têtes magnétiques rotatives ou des modulateurs optiques d'un rayonnement Laser pour enregistrer sur trois pistes différentes les signaux de chrominance $D_R$, $D_B$ et de luminance $E'_Y$.

15. Système selon la revendication 14, caractérisé en ce que trois oscillateurs (94, 95, 96) par exemple contrôlés en tension sont respectivement reliés en sortie des trois convertisseurs numériques-analogiques (91, 92, 93) précités, deux des oscillateurs (94, 95) fournissant respectivement le signal de sous-porteuse modulé par le signal de chrominance ($D_R$) et le signal de sous-porteuse modulé par le signal de chrominance ($D_B$), qui sont appliqués aux deux voies d'enregistrement (C, D) précitées, le troisième oscillateur (96) fournissant le signal de porteuse modulé par le signal de luminance ($E'_Y$) à la troisième voie d'enregistrement (E) précitée.

16. Système selon la revendication 15, caractérisé en ce que les oscillateurs précités sont asservis par un même signal d'horloge de haute fréquence.

17. Système selon l'une des revendications 14 à 16, caractérisé en ce qu'entre les bornes de sortie des oscillateurs (94, 95) et les deux voies d'enregistrement (C et D) est disposé un circuit de conversion (70), à la fréquence de ligne, du mode de transmission parallèle en mode de transmission séquentiel des signaux de sous - porteuse de chrominance ($D_R$, $D_B$), le circuit de conversion ayant deux voies parallèle de traitement (A, B) de manière à faire ainsi alternativement passer à la sortie de l'une des voies le signal vidéo ($D_R$) pendant la durée d'une ligne, puis, à la sortie de l'autre voie le signal vidéo ($D_B$) pendant la durée de la ligne suivante.   .

18. Système selon la revendication 17, caractérisé en ce que chacune des voies de traitement (A, B) précitée comprend un élément de commutation (72 ; 74) actionné par un organe de commande (79) à la fréquence de ligne.

19. Système selon la revendication 18, caractérisé en ce que l'organe de commande (79) précité est une bascule dont l'entrée horloge reçoit les signaux de synchronisation de ligne, et dont la sortie directe (Q) est reliée à l'entrée de commande de l'un des éléments de commutation(72) tandis que la sortie complémentée ($\overline{Q}$) est reliée à l'entrée de commande de l'autre élément de commutation (74).

20. Système selon la revendication 19, caractérisé en ce que la bascule (79) précitée est une bascule du type (J-K).

21. Système selon l'une des revendications 14 à 20, caractérisé en ce que chacune des voies de traitement (A et B) précitées comprend en série avec chaque élément de commutation (72 ; 74) un diviseur de fréquence (71 ; 73) recevant le signal de sous-porteuse de chrominance correspondant dont la fréquence de sous-porteuse est égale à un multiple de la fréquence de sous-porteuse classique.

22. Système selon l'une des revendications 14 à 21, caractérisé en ce que les deux éléments de commutation (72 et 74) précités sont des commutateurs analogiques.

23. Système selon l'une des revendications 14 à 22, caractérisé en ce que les sorties des éléments de commutation (72, 74) du circuit de conversion (70) sont multiplexées par l'intermédiaire d'une porte OU vers un circuit mélangeur (75) recevant également d'une part, par l'intermédiaire d'un circuit série comprenant une ligne à retard (78) et un circuit discriminateur (77) le signal de luminance disponible à la borne de sortie (49) du dispositif émetteur et, d'autre part, les signaux de synchronisation issus de la borne (56) du dispositif émetteur, le circuit mélangeur (75) produisant un signal vidéo composite pour la visualisation et le contrôle à un dispositif récepteur tel qu'un moniteur ou récepteur de télévision couleur du signal vidéo enregistré sur le support d'enregistrement précité.

24. Système selon l'une des revendications précédentes, caractérisé en ce qu'il comprend un dispositif de sélection automatique ou manuel des signaux vidéo à enregistrer sur les différents groupes de bornes de sortie (48, 49, 50) ; (58, 59, 60) ; (61, 62, 63).

0123584

FIG. 1

2 / 4

**Fig. 2**

73 ... 71

-66-

-61-  -62-  -63-  68
d
c
b

-70-  -64-  65

69

**Fig. 3**

U
a
t
0
b
c
d

**Fig. 4**

A
B
C
72

Fig.5

**_Fig. 6_**

**_Fig. 7_**

**0123584**

Numéro de la demande

## Office européen des brevets

## RAPPORT DE RECHERCHE EUROPEENNE

EP 84 40 0577

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | DE-A-1 512 299 (LOEWE OPTA)<br>* Page 5, ligne 11 - page 6, ligne 3; page 10, lignes 14-20 * | 1,10 | H 04 N 9/40 |
| Y | | 3,4 | |
| | --- | | |
| X | US-A-3 424 860 (DELVAUX)<br>* Colonne 4, lignes 20-46 * | 1,10 | |
| Y | | 3 | |
| | --- | | |
| Y | L'ONDE ELECTRIQUE, vol. 47, no. 486, septembre 1967, pages 1094-1110, Paris, FR; J. FAGOT: "Optimalisation des paramètres du système de télévision en couleur SECAM"<br>* Page 1095, colonne de gauche, ligne 18 - page 1096, colonne de gauche, ligne 25 * | 3,4 | **DOMAINES TECHNIQUES RECHERCHES (Int. Cl. 3)**<br><br>H 04 N |
| | ----- | | |

Le présent rapport de recherche a été établi pour toutes les revendications

| Lieu de la recherche<br>LA HAYE | Date d'achèvement de la recherche<br>04-07-1984 | Examinateur<br>CRISTOL Y. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82